(19) **Europäisches Patentamt / European Patent Office / Office européen des brevets**

(11) **EP 2 932 226 B1**

(12) # FASCICULE DE BREVET EUROPEEN

(45) Date de publication et mention
de la délivrance du brevet:
**13.03.2019 Bulletin 2019/11**

(21) Numéro de dépôt: **13815078.4**

(22) Date de dépôt: **12.12.2013**

(51) Int Cl.:
**G01M 15/11** *(2006.01)*    **G01M 15/12** *(2006.01)*
**G10K 11/178** *(2006.01)*

(86) Numéro de dépôt international:
**PCT/FR2013/053052**

(87) Numéro de publication internationale:
**WO 2014/091165 (19.06.2014 Gazette 2014/25)**

(54) **METHODE ET DISPOSITIF DE DETECTION ACOUSTIQUE D'UN DYSFONCTIONNEMENT D'UN MOTEUR EQUIPE D'UN CONTROLE ACTIF DU BRUIT**

VERFAHREN UND VORRICHTUNG ZUR AKUSTISCHEN DETEKTION EINER FEHLFUNKTION EINES MOTORS MIT EINER AKTIVEN GERÄUSCHKONTROLLE

METHOD AND DEVICE FOR ACOUSTICALLY DETECTING A MALFUNCTION OF A MOTOR HAVING AN ACTIVE NOISE CONTROL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2012 FR 1262025**

(43) Date de publication de la demande:
**21.10.2015 Bulletin 2015/43**

(73) Titulaire: **Safran Aircraft Engines**
**75015 Paris (FR)**

(72) Inventeur: **NICQ, Geoffroy**
**F-77550 Moissy-Cramayel cedex (FR)**

(74) Mandataire: **Gevers & Orès**
**41 avenue de Friedland**
**75008 Paris (FR)**

(56) Documents cités:
**FR-A1- 2 973 877**

**Description**

La présente invention concerne le domaine des moteurs et plus particulièrement la détection acoustique d'un dysfonctionnement d'un moteur embarqué sur un aéronef.

On connaît des moyens de détecter acoustiquement le dysfonctionnement d'un moteur, par exemple en identifiant les raies en fréquence caractéristiques de défauts types dans sa réponse acoustique à une excitation, comme il est proposé dans la demande de brevet EP 1 205 749 pour vérifier l'endommagement d'une aube de turbine.

Par ailleurs, l'application du contrôle actif de bruit aux moteurs d'aéronefs, notamment dans l'exemple décrit par le présent déposant pour l'atténuation acoustique du bruit d'hélice d'un turbopropulseur d'aéronef à double hélice contrarotative dans sa demande de brevet FR 2 972 710, permet d'élaborer des systèmes actifs d'atténuation acoustique du bruit du moteur pour son environnement. Un tel système produit un signal sonore par des actionneurs de telle sorte qu'il se combine avec le bruit émis par le moteur, appelé ici bruit primaire, pour annuler le bruit perçu en des régions cibles de l'espace.

Pour un dispositif de surveillance de fonctionnement du moteur, ces systèmes actifs d'atténuation acoustique présentent l'inconvénient de masquer les bruits caractéristiques d'un dysfonctionnement. Sachant que les bruits des dysfonctionnements que l'on veut surveiller comportent des fréquences caractéristiques, le présent déposant a élaboré une méthode de surveillance consistant à désactiver le système de contrôle actif de bruit dans des bandes de fréquences étroites autour de ces raies caractéristiques, décrite dans la demande de brevet FR 1153076 déposée le 8 avril 2011.

Cette méthode présente plusieurs inconvénients. Elle impose de ne pas réduire dans le bruit moteur les harmoniques suivies par le dispositif de surveillance. Cela entraîne une dégradation des performances du système actif d'atténuation de bruit puisque toutes les harmoniques moteur, et parmi elles les plus significatives, ne sont pas réduites.

De plus, les boucles de commande des systèmes de contrôle actif sont très délicates à mettre au point et leur robustesse est critique. Pour minimiser le bruit et pour bien identifier les dysfonctionnements, les plages de fréquences où le bruit n'est pas réduit autour des raies caractéristiques sont limitées en insérant des filtres passe bande étroite dans la boucle de régulation du contrôle actif, ce qui entraine des déphasages importants qui risquent de déstabiliser le système. Dans certaines configurations, l'application de cette méthode peut dégrader fortement les performances de réduction de bruit du système de contrôle actif, voire le rendre instable. Ce problème peut être particulièrement sensible si on essaie d'appliquer la méthode avec un système de contrôle actif fonctionnant en « Feed back » (avec rétroaction), dont les données de sortie sont utilisées pour corriger les commandes des actionneurs.

Enfin, lorsque cette méthode est utilisée avec un système de contrôle actif fonctionnant en « Feed forward » (sans rétroaction), dont les données d'entrée sont captées en amont sans interaction avec les cibles de réduction de bruit, elle nécessite l'utilisation d'un moyen supplémentaire d'enregistrement des bruits.

L'invention vise à éviter d'interférer avec le fonctionnement du système de contrôle actif, n'impose pas de limitations de performances pour l'atténuation de bruit et n'introduit pas, dans tous les cas, l'utilisation de moyens secondaires d'enregistrement du bruit.

A cet effet, l'invention concerne une méthode de détection acoustique d'au moins un dysfonctionnement (DYS) d'un moteur, le moteur générant un bruit primaire Po qui est traité par un système de contrôle actif du bruit émettant sur les cibles de réduction de bruit un signal acoustique Pc produit par au moins un actionneur et relié par une fonction de transfert H à un signal Y produit par ledit système de contrôle actif du bruit, ledit dysfonctionnement (DYS) ayant une signature acoustique identifiable dans le bruit primaire Po aux cibles de réduction de bruit, caractérisée en ce qu'elle comprend les étapes suivantes :

- Une acquisition dudit signal Y produit par le système de contrôle actif ;
- L'identification de l'apparition éventuelle du dysfonctionnement par un moyen de surveillance qui exploite la connaissance de Y et de H et émet un message d'alerte le cas échéant.

De préférence, le signal Y est constitué de l'ensemble des signaux de commande des actionneurs et le moyen de surveillance analyse le bruit primaire reconstitué à partir de la connaissance de Y et de H pour y identifier le bruit d'éventuels dysfonctionnements à partir d'harmoniques caractéristiques.

Lorsque la fonction de transfert entre le signal Y et les cibles de réduction de bruit est considérée stable et non réévaluée en cours de fonctionnement, un mode de réalisation préférentiel de la méthode l'utilise comme donnée de l'étape d'identification. Par contre, si la fonction de transfert est réévaluée par le système de contrôle actif du bruit, par exemple à cause d'un changement de régime du moteur, un mode de mise en oeuvre de la méthode adapté à cette situation comprend l'acquisition des évolutions temporelles de cette fonction de transfert en plus du signal Y pour leur utilisation dans l'étape d'identification.

Avantageusement, un mode de réalisation de la méthode limite les calculs de l'étape d'identification à des fréquences caractéristiques à surveiller. Dans ce cas, une étape intermédiaire entre l'acquisition et l'identification extrait des indicateurs réduits sur les signaux de commande et la fonction de transfert (les harmoniques utilisées pour les calculs pour reconstituer le bruit primaire sur les fréquences caractéristiques). L'utilisation d'indicateurs réduits allège fortement la charge de calcul et permet un traitement en temps réel avec des moyens de calcul embarqués dans l'installation comportant le moteur.

Dans une variante supplémentaire, le signal de contrôle du bruit ainsi que l'évolution temporelle de l'état de la fonction de transfert sont transmis au sol pour des analyses plus complètes. Cela permet d'alléger encore la charge des moyens de calcul embarqués.

L'invention concerne également un dispositif de détection acoustique d'au moins un dysfonctionnement (DYS) d'un moteur, le moteur générant un bruit primaire Po, agencé pour être utilisé en présence d'un système de contrôle actif du bruit qui émet vers les cibles de réduction de bruit un signal acoustique Pc produit par au moins un actionneur et relié par une fonction de transfert H à un signal Y produit par ledit système de contrôle actif du bruit, ledit dysfonctionnement (DYS) ayant une signature acoustique identifiable dans le bruit primaire Po aux cibles de réduction de bruit, caractérisé en ce qu'il comporte :

- un moyen d'acquisition du signal Y produit par le système de contrôle actif;
- un moyen de surveillance agencé pour identifier l'apparition éventuelle du dysfonctionnement (DYS) à partir du signal Y et de la connaissance de la fonction de transfert H et émettre un message d'alerte le cas échéant.

Le dispositif de détection acoustique de dysfonctionnement peut être adapté à un système de réduction active de bruit existant. Il ne nécessite pas de modification des lois de contrôle ni d'instrumentation intrusive complémentaire. Si le système de contrôle actif du bruit n'est pas équipé de moyens de recopie des signaux de commandes à des fins de surveillance électronique, appelée monitoring, de simples capteurs inductifs sur les câbles de commande des actionneurs peuvent suffire pour acquérir ces signaux.

Avantageusement, le dispositif sera complété des moyens pour implémenter les différents modes de réalisation de la méthode présentés plus haut.

L'invention sera mieux comprise grâce à une description plus détaillée d'un mode de réalisation, en référence aux dessins annexés sur lesquels :

La figure 1 représente schématiquement un procédé de réduction du bruit par un système de contrôle actif « Feed-forward » ;
La figure 2 représente schématiquement un procédé de réduction du bruit par un système de contrôle actif « Feed-back » ;
La figure 3 représente schématiquement la relation entre les bandes caractéristiques de fréquences de certains dysfonctionnements et le régime du moteur ;
La figure 4 représente schématiquement le fonctionnement d'un dispositif de détection acoustique de certains dysfonctionnements du moteur selon l'invention dans le cas d'un système de contrôle actif «Feed-back » .
La figure 5 représente schématiquement le traitement des informations selon une variante de l'invention ;
La figure 6 représente schématiquement le traitement des informations selon une seconde variante de l'invention ;

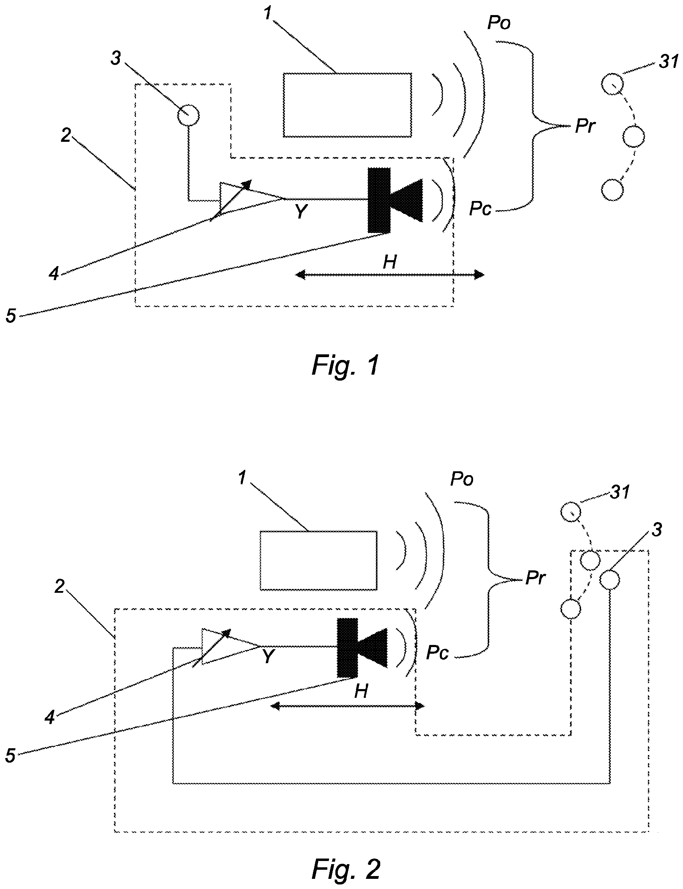

La figure 1 représente schématiquement le principe de réduction du bruit pour moteur dans une installation équipée d'un système de contrôle actif Feed-Forward. L'installation peut être un véhicule, par exemple un aéronef, voire un banc d'essai. La réduction du bruit vise une région de l'espace que l'on cherchera généralement très étendue. A l'intérieur de cette région, on est susceptible d'enregistrer le bruit perçu en des localisations appelées cibles de réduction de bruit.

Le moteur 1 émet un bruit primaire correspondant à un signal acoustique Po aux cibles de réduction de bruit 31. Un système de contrôle actif du bruit 2 selon l'état de l'art émet, grâce à un ou plusieurs actionneurs 5, un autre bruit correspondant à un signal Pc aux cibles de réduction de bruit tel que le bruit perçu Pr par l'addition des signaux Po et Pc reste d'une intensité inférieure à un niveau adéquat. Pour arriver à ce résultat, le système de contrôle actif en mode « Feed-forward » utilise des capteurs de données 3 sur le fonctionnement du moteur qui n'interfèrent pas avec le résultat sur le bruit perçu Pr et calcule à l'aide d'un algorithme implémenté dans un calculateur 4 les signaux de commande envoyés aux actionneurs 5 pour qu'ils produisent le signal Pc vers les cibles de réduction de bruit. Le terme de signal Y sera utilisé dans le présent document pour représenter l'ensemble des signaux de commande des actionneurs lorsqu'il y en a plusieurs ; le signal Y a donc plusieurs composantes dans ce cas.

On peut remarquer à ce stade que, par définition, dans la bande fréquentielle où le système de contrôle actif est efficace le bruit perçu est faible et donc le bruit Pc émis pas les actionneurs aux cibles de réduction de bruit donne directement une bonne estimation de celui du bruit primaire Po par un déphasage. De plus, la connaissance des signaux de contrôle des actionneurs donne directement accès à Pc par une fonction de transfert H qui prend en compte la réponse des actionneurs et la transmission de leur signal acoustique vers les cibles de réduction de bruit. Enfin, une bonne estimation de cette fonction de transfert est disponible car le système de contrôle actif du bruit l'utilise soit comme donnée d'entrée soit par une évaluation interne.

Un mode préférentiel de mise en oeuvre de l'invention utilise donc une évaluation du bruit primaire du moteur aux cibles de réduction de bruit en calculant le bruit Pc directement à partir du signal Y produit par le système de contrôle actif du bruit par une combinaison matricielle avec la fonction de transfert H qui peut être notée dans le domaine fréquentiel :

$$Pc_i = Y_k . H_{ki} \quad (1)$$

Où $Pc_i$ et $Y_k$ sont les composantes des signaux Pc et Y aux fréquences i et k, et $H_{ki}$ est une décomposition matricielle de la fonction de transfert H sur les fréquences de calcul.

La figure 2 représente schématiquement le principe de réduction du bruit pour moteur dans une installation équipée d'un système de contrôle actif par un système de contrôle actif « Feed-back ». La principale différence par rapport à la figure 1 est la position du capteur 3 qui, dans ce cas, fournit au système de contrôle actif des informations sur le bruit perçu. Cette différence est importante car elle peut permettre d'élaborer des systèmes plus efficaces de réduction de bruit mais au prix d'une complexité accrue de l'algorithme utilisé dans le calculateur 4. Il est cependant remarquable que cette disposition ne change pas la relation qui a été décrite précédemment entre les signaux des actionneurs et le signal aux cibles de réduction de bruit.

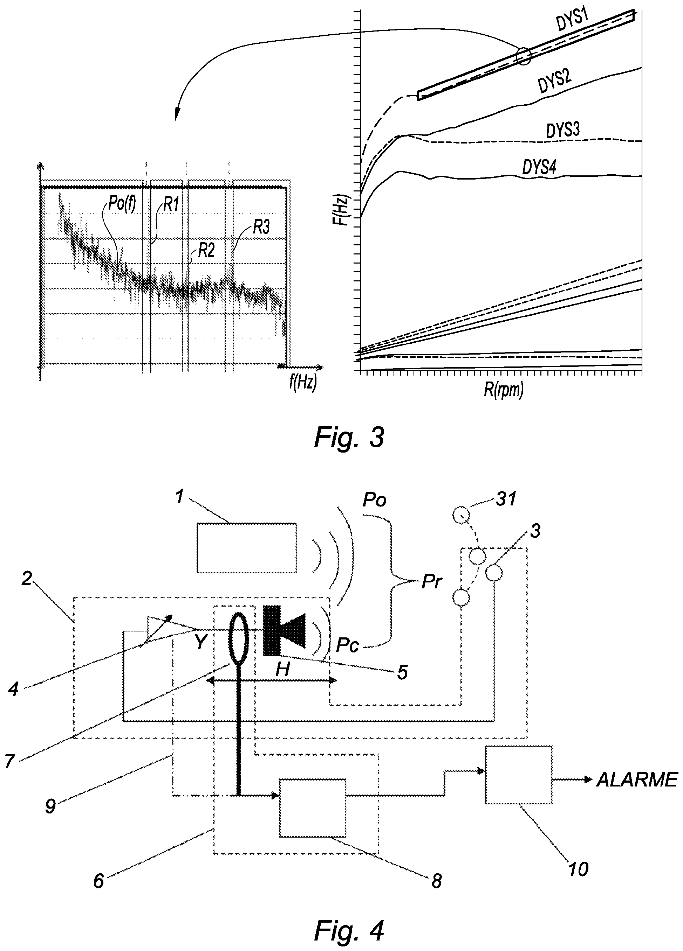

La figure 4 montre le schéma de principe d'un premier mode de réalisation de la méthode conformément à l'invention pour la détection acoustique des dysfonctionnements d'un moteur 1 équipé d'un système de contrôle actif du bruit 2.

Un moyen d'acquisition 6 du signal Y utilise de préférence des capteurs inductifs 7 autour des câbles de commande des actionneurs 5 aptes à enregistrer ce signal. Il est en général complété par un boitier électronique 8 qui permet de transformer le signal des capteurs en un signal numérique exploitable par le moyen d'identification 10.

L'acquisition du signal Y est non intrusive au sens où elle n'a aucune influence sur le fonctionnement du système de contrôle actif de bruit 2. Si le système de contrôle actif 2 est équipé d'une sortie fournissant le signal de Y, un simple branchement constituera, par exemple, un mode de réalisation simplifié de l'étape d'acquisition.

Le signal Y a autant de composantes scalaires qu'il existe d'actionneurs 5. Dans l'exemple, Y correspond au signal directement envoyé aux actionneurs mais ce n'est pas limitatif. Par exemple, une variante de la méthode utilisera un signal vers un composant interne du système de contrôle actif du bruit en amont dont la fonction de transfert vers les actionneurs est définie.

Lorsque la fonction de transfert H entre les actionneurs et les signaux de contrôle est considérée comme stable et non réévaluée au cours du fonctionnement du système de contrôle actif de bruit 2, l'algorithme du moyen de surveillance 10 du moteur qui identifie les dysfonctionnements émet un signal d'alarme le cas échéant est alimenté uniquement par les signaux de commande Y des capteurs provenant du moyen d'acquisition 6. Dans un mode de réalisation particulier, le bruit primaire généré par le moteur qui serait perçu par les cibles de réduction de bruit en l'absence de contrôle actif est reconstitué, selon la formule (1), par combinaison matricielle entre le signal de commande Y et la fonction de transfert H, qui est une donnée enregistrée dans le calculateur du moyen de surveillance 10.

Pour réaliser la détection acoustique d'un dysfonctionnement (DYS) dans le moteur à partir du bruit moteur reconstitué, le moyen de surveillance 10 exploite les caractéristiques de la signature acoustique dudit dysfonctionnement qui peuvent être extraites de ce bruit. De manière connue pour les moteurs, à chaque dysfonctionnement DYS surveillé peut être associée au moins une raie R1 à une fréquence caractéristique. Le graphe de gauche de la figure 3 illustre de quelle manière un défaut DYS1 peut introduire dans le spectre du bruit moteur à un régime donné une raie R1 ainsi qu'éventuellement une ou plusieurs harmoniques telles que R2 ou R3. Des algorithmes connus de l'homme du métier permettent d'isoler ces raies dans le spectre de bruit et de les associer à un évènement que l'on veut identifier. Il est possible, par exemple, d'appliquer la méthode utilisée dans la demande de brevet FR 1153076 qui consiste à évaluer l'intensité d'énergie dans une bande étroite de fréquences autour de la raie caractéristique (représentée dans la figure 3), puis d'identifier la signature du dysfonctionnement DYS au dépassement d'un seuil fixé. L'homme du métier saura également, à partir de ces données, suivre l'apparition éventuelle de plusieurs dysfonctionnements correspondant à des ensembles de fréquences caractéristiques spécifiques. Il sera également possible d'adapter ces algorithmes si les fréquences caractéristiques de ces dysfonctionnement évoluent, notamment en fonction du régime du moteur comme c'est illustré dans le graphe de droite de la figure 3. Le moyen de surveillance est ensuite équipé d'algorithmes spécifiques pour déterminer s'il déclenche ou non des alarmes en fonction des dysfonctionnements identifiés.

Lorsque la fonction de transfert H évolue au cours du temps et qu'elle est réévaluée par le calculateur 4 du système de contrôle actif du bruit du moteur, dans un mode de réalisation préférentiel, le moyen d'acquisition 6 recueille les informations sur les évolutions de la fonction de transfert H, par exemple au moyen d'un branchement 9 vers le calculateur 4. Dans ce mode de réalisation, le moyen de surveillance 10 applique dans le principe la même méthode de combinaison matricielle de Y et H à chaque moment que précédemment mais avec un volume de calculs plus important que lorsque la fonction de transfert est stable.

Le branchement 9, contrairement à l'enregistrement 7 du signal de commande Y, peut demander une adaptation optionnelle du système de contrôle actif de bruit 2.

La figure 4 présente le principe de fonctionnement avec un système de contrôle actif de type « Feed-back » mais le dispositif de détection acoustique des dysfonctionnements fonctionnerait de la même façon avec un système de contrôle actif de type « Feed-forward » car il n'interfère pas avec le fonctionnement du calculateur 4.

Conformément à un mode de réalisation avantageux, la transformation en composantes fréquentielles du signal Y, le cas échéant des évolutions de la fonction de transfert H, est faite dans le moyen d'acquisition 6 plutôt que dans le moyen de surveillance 10. Cette disposition non limitative sera utilisée en particulier pour implémenter une variante de la méthode utilisant des indicateurs réduits sur le signal Y et sur les évolutions de la fonction de transfert.

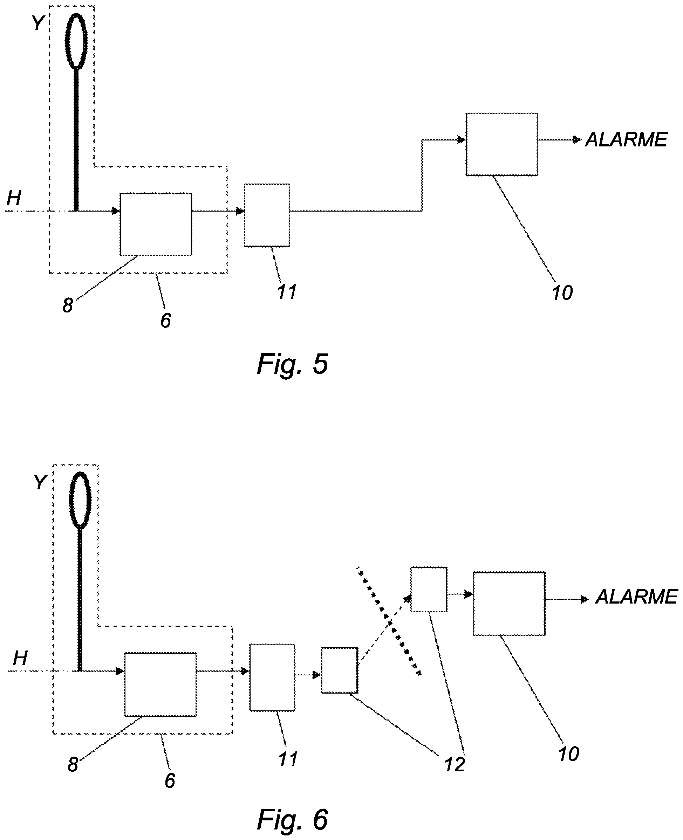

Dans cette variante, le moyen de surveillance 10 ne reconstitue le bruit primaire que sur un petit nombre de fréquences caractéristiques suffisantes pour identifier des dysfonctionnements critiques. Il n'a donc besoin en entrée que d'informations concernant Y et H sur un nombre limité de fréquences pour reconstituer le bruit aux fréquences caractéristiques. Ces informations sont appelées ici les indicateurs réduits. Dans un mode de réalisation particulier décrit sur la figure 5, un moyen intermédiaire 11 réalise une étape d'extraction de ces indicateurs réduits à partir du moyen d'acquisition 6.

Cette variante permet de limiter la puissance de calcul pour le moyen de surveillance de fonctionnement du moteur. Pour limiter encore le besoin en puissance de calcul embarquée sur un aéronef, par exemple, une variante de la méthode consiste à déporter au sol le moyen de surveillance des dysfonctionnements 10. Un mode de réalisation correspondant, illustré sur la figure 6, comporte des moyens de transmission à distance 12 interposés entre le moyen d'extraction 11 et le moyen de surveillance déporté.

Un autre moyen de limiter la puissance de calcul et d'augmenter la fiabilité de la détection est de détecter des plages de fonctionnement répétables (dans 11) et de n'effectuer les moyens d'extraction harmoniques et de transmission au sol que pendant ces seules plages de fonctionnement appelées « Operating Modes ».

## Revendications

**1.** Méthode de détection acoustique d'au moins un dysfonctionnement (DYS) d'un moteur (1), le moteur générant un bruit primaire Po qui est traité par un système de contrôle actif du bruit (2) en émettant vers les cibles de réduction de bruit un signal acoustique Pc produit par au moins un actionneur (5) et relié par une fonction de transfert H à un signal Y de commande dudit au moins un actionneur (5) produit par ledit système de contrôle actif du bruit, ledit dysfonctionnement (DYS) ayant une signature acoustique identifiable dans le bruit primaire Po aux niveau des cibles de réduction de bruit, **caractérisée en ce qu'**elle comprend les étapes suivantes :

- acquisition dudit signal Y produit par le système de contrôle actif ;
- identification de l'apparition éventuelle du dysfonctionnement (DYS) par un moyen de surveillance qui exploite la connaissance de Y et de la fonction de transfert H utilisée par le système de contrôle actif de bruit et émet un message d'alerte le cas échéant.

**2.** Méthode de détection acoustique d'au moins un dysfonctionnement (DYS) d'un moteur selon la revendication précédente dans laquelle le système de contrôle actif du bruit évalue des évolutions de la fonction de transfert H au cours du temps qui font l'objet d'une acquisition et sont utilisées par l'étape d'identification.

**3.** Méthode de détection acoustique d'au moins un dysfonctionnement d'un moteur selon les revendications 1 ou 2 dans laquelle le signal Y est constitué de l'ensemble des signaux de commande des actionneurs du système de contrôle actif.

**4.** Méthode de détection acoustique d'au moins un dysfonctionnement d'un moteur selon l'une des revendications 1 à 3 selon laquelle le moyen de surveillance reconstitue une représentation du signal acoustique Pc par combinaison matricielle entre le signal Y et la fonction de transfert H et y identifie la présence éventuelle de la signature acoustique dudit dysfonctionnement (DYS) par comparaison avec un bruit moteur sans dysfonctionnement.

**5.** Méthode de détection acoustique d'au moins un dysfonctionnement d'un moteur selon l'une des revendications précédentes, dans laquelle l'étape d'identification est implémentée sur un ensemble limité de fréquences caractéristiques, et comprenant une étape intermédiaire d'extraction des signaux provenant de l'étape d'acquisition qui fournit des indicateurs réduits aux composantes de Y et de H pour des fréquences spécifiques à l'identification du bruit du dysfonctionnement (DYS) auxdites fréquences caractéristiques.

**6.** Méthode de détection acoustique d'au moins un dysfonctionnement d'un moteur selon l'une des revendications précédentes où l'étape d'identification et de surveillance des dysfonctionnements est effectuée à distance, en dehors de l'installation comportant le moteur.

**7.** Dispositif de détection acoustique d'au moins un dysfonctionnement (DYS) d'un moteur (1), le moteur générant un bruit primaire Po, agencé pour être utilisé en présence d'un système de contrôle actif du bruit (2) qui émet vers les cibles de réduction de bruit un signal acoustique Pc produit par au moins un actionneur (5) et relié par une fonction de transfert H à un signal Y de commande dudit au moins un actionneur (5) produit par ledit système de contrôle actif du bruit, ledit dysfonctionnement (DYS) ayant une signature acoustique identifiable dans le bruit primaire Po aux cibles de réduction de bruit, **caractérisé en ce qu'**il comporte :

> - un moyen d'acquisition (6) du signal Y produit par le système de contrôle actif ;
> - un moyen de surveillance (10) agencé pour identifier l'apparition éventuelle du dysfonctionnement (DYS) à partir du signal Y et de la connaissance de la fonction de transfert H utilisée par le système de contrôle actif de bruit et émettre un message d'alerte le cas échéant.

**8.** Dispositif de détection acoustique d'au moins un dysfonctionnement (DYS) d'un moteur selon la revendication précédente dont le moyen d'acquisition (6) est agencé pour capter auprès du système de contrôle actif de bruit les évolutions de la fonction de transfert qu'il évalue au cours du temps et dont le moyen de surveillance (10) est agencé pour utiliser lesdites évolutions de la fonction de transfert.

**9.** Dispositif de détection acoustique des dysfonctionnements d'un moteur selon la revendication précédente pour lequel le moyen d'acquisition du signal Y comporte des capteurs inductifs (7) sur les câbles de commande des actionneurs aptes à recueillir les signaux de commande.

**10.** Dispositif de détection acoustique des dysfonctionnements d'un moteur selon l'une des revendications 7 à 9, comportant, entre le moyen d'acquisition (6) et le moyen de surveillance (10), un moyen d'extraction (11) d'indicateurs réduits aux composantes de Y et de H pour les fréquences spécifiques à l'identification du bruit du dysfonctionnement (DYS) sur un ensemble limité de fréquences caractéristiques.

**11.** Dispositif de détection acoustique des dysfonctionnements d'un moteur selon l'une des revendications 7 à 10 dans lequel le moyen de surveillance (10) est déporté et comporte des moyens de transmission à distance (12) entre les moyens embarqués du dispositif et le moyen de surveillance déporté.

**Patentansprüche**

**1.** Verfahren zur akustischen Detektion mindestens einer Fehlfunktion (DYS) eines Motors (1), wobei der Motor ein primäres Geräusch Po generiert, das von einem aktiven Geräuschkontrollsystem (2) verarbeitet wird, indem an die Geräuschreduzierungsziele ein akustisches Signal Pc gesendet wird, das von mindestens einem Aktuator (5) erzeugt und durch eine Übertragungsfunktion H mit einem Steuersignal Y des mindestens einen Aktuators (5) verbunden ist, das von dem aktiven Geräuschkontrollsystem erzeugt wird, wobei die Fehlfunktion (DYS) eine identifizierbare akustische Signatur in dem primären Geräusch Po im Bereich der Geräuschreduzierungsziele aufweist, **dadurch gekennzeichnet, dass** es die folgenden Schritte umfasst:

> - Erfassen des vom aktiven Kontrollsystem erzeugten Signals Y;
> - Identifizieren des eventuellen Auftretens der Fehlfunktion (DYS) durch ein Überwachungsmittel, das die Kenntnis von Y und der vom aktiven Geräuschkontrollsystem verwendeten Übertragungsfunktion H nutzt und gegebenenfalls eine Warnmeldung ausgibt.

**2.** Verfahren zur akustischen Detektion mindestens einer Fehlfunktion (DYS) eines Motors nach dem vorstehenden Anspruch, wobei das aktive Geräuschkontrollsystem Evolutionen der Übertragungsfunktion H im Laufe der Zeit auswertet, die Gegenstand einer Erfassung sind und vom Identifizierungsschritt verwendet werden.

**3.** Verfahren zur akustischen Detektion mindestens einer Fehlfunktion eines Motors nach den Ansprüchen 1 oder 2, wobei das Signal Y aus allen Steuersignalen der Aktuatoren des aktiven Kontrollsystems besteht.

**4.** Verfahren zur akustischen Detektion mindestens einer Fehlfunktion eines Motors nach einem der Ansprüche 1 bis 3, wobei das Überwachungsmittel eine Repräsentation des akustischen Signals Pc durch Matrixkombination zwischen dem Signal Y und der Übertragungsfunktion H rekonstruiert und das eventuelle Vorhandensein der akustischen Signatur der Fehlfunktion (DYS) darin im Vergleich zu einem Motorgeräusch ohne Fehlfunktion identifiziert.

**5.** Verfahren zur akustischen Detektion mindestens einer Fehlfunktion eines Motors nach einem der vorstehenden Ansprüche, wobei der Identifizierungsschritt auf einem begrenzten Satz von charakteristischen Frequenzen umgesetzt wird, und umfassend einen Zwischenschritt zum Extrahieren von Signalen aus dem Erfassungsschritt, der auf die Komponenten von Y und H reduzierten Indikatoren für Frequenzen bereitstellt, die spezifisch für die Identifizierung des Geräusches der Fehlfunktion (DYS) bei den charakteristischen Frequenzen sind.

**6.** Verfahren zur akustischen Detektion mindestens einer Fehlfunktion eines Motors nach einem der vorstehenden Ansprüche, wobei der Schritt der Identifizierung und Überwachung von Fehlfunktionen außerhalb der den Motor beinhaltenden Anlage aus der Ferne durchgeführt wird.

7. Vorrichtung zur akustischen Detektion mindestens einer Fehlfunktion (DYS) eines Motors (1), wobei der Motor ein primäres Geräusch Po generiert, das zur Verwendung im Beisein eines aktiven Geräuschkontrollsystems (2) angeordnet ist, das an die Geräuschreduzierungsziele ein akustisches Signal Pc sendet, das von mindestens einem Aktuator (5) erzeugt und durch eine Übertragungsfunktion H mit einem Steuersignal Y des mindestens einen Aktuators (5) verbunden ist, das von dem aktiven Geräuschkontrollsystem erzeugt wird, wobei die Fehlfunktion (DYS) eine identifizierbare akustische Signatur in dem primären Geräusch Po an den Geräuschreduzierungszielen aufweist, **dadurch gekennzeichnet, dass** es Folgendes beinhaltet:

- ein Mittel zum Erfassen (6) des vom aktiven Kontrollsystem erzeugten Signals Y;
- ein Mittel zum Überwachen (10), das zur Identifizierung des eventuellen Auftretens der Fehlfunktion (DYS) aus dem Signal Y und der Kenntnis der vom aktiven Geräuschkontrollsystem verwendeten Übertragungsfunktion H und gegebenenfalls zur Ausgabe einer Warnmeldung angeordnet ist.

8. Vorrichtung zur akustischen Detektion mindestens einer Fehlfunktion (DYS) eines Motors nach dem vorstehenden Anspruch, wobei das Mittel zum Erfassen (6) zum Messen aus dem aktiven Geräuschkontrollsystem der Evolutionen der Übertragungsfunktion, die es im Laufe der Zeit auswertet, angeordnet ist und wobei das Mittel zum Überwachen (10) zum Verwenden der Evolutionen der Übertragungsfunktion angeordnet ist.

9. Vorrichtung zur akustischen Detektion von Fehlfunktionen eines Motors nach dem vorstehenden Anspruch, wobei das Mittel zum Erfassen des Signals Y induktive Sensoren (7) an den Steuerkabeln der Aktuatoren beinhaltet, welche zum Sammeln der Steuersignale geeignet sind.

10. Vorrichtung zur akustischen Detektion von Fehlfunktionen eines Motors nach einem der Ansprüche 7 bis 9, die zwischen dem Mittel zum Erfassen (6) und dem Mittel zum Überwachen (10) ein Mittel (11) zum Extrahieren von auf die Komponenten von Y und von H reduzierten Indikatoren für die Frequenzen, die für die Identifizierung des Geräusches der Fehlfunktion (DYS) auf einem begrenzten Satz von charakteristischen Frequenzen spezifisch sind, beinhaltet.

11. Vorrichtung zur akustischen Detektion von Fehlfunktionen eines Motors nach einem der Ansprüche 7 bis 10, wobei das Mittel zum Überwachen (10) versetzt ist und Mittel zur Fernübertragung (12) zwischen den eingebauten Mitteln der Vorrichtung und dem versetzten Mittel zum Überwachen beinhaltet.

**Claims**

1. Method for acoustically detecting at least one malfunction (DYS) of an engine (1), the engine generating a primary noise Po which is processed by an active noise control system (2) by emitting, towards the noise reduction targets, an acoustic signal Pc which is produced by at least one actuator (5) and is linked by a transfer function H to a control signal Y for said at least one actuator (5), which signal is produced by said active noise control system, said malfunction (DYS) having an acoustic signature which can be identified in the primary noise Po in the region of the noise reduction targets, **characterised in that** it comprises the steps of:

- acquiring said signal Y which is produced by the active control system;
- identifying the possible occurrence of the malfunction (DYS) using a monitoring means which utilises the knowledge of Y and of the transfer function H used by the active noise control system and emits an alert message if necessary.

2. Method for acoustically detecting at least one malfunction (DYS) of an engine according to the preceding claim, wherein the active noise control system evaluates changes in the transfer function H over time which are the subject of an acquisition and are used by the identification step.

3. Method for acoustically detecting at least one malfunction of an engine according to claim 1 or 2, wherein the signal Y is formed by the set of control signals of the actuators of the active control system.

4. Method for acoustically detecting at least one malfunction of an engine according to one of the claims 1 to 3, wherein the monitoring means reconstructs a representation of the acoustic signal Pc by matrix combination between the signal Y and the transfer function H and identifies therein the possible presence of the acoustic signature of said malfunction (DYS) by comparison with engine noise without any malfunctions.

5. Method for acoustically detecting at least one malfunction of an engine according to one of the preceding claims, wherein the identification step is implemented on a limited set of characteristic frequencies, and comprises an intermediate step of extracting signals originating from the acquisition step which provides indicators reduced to the components Y and H for frequencies specific to the identification of the malfunction (DYS) noise at said characteristic frequencies.

6. Method for acoustically detecting at least one malfunction of an engine according to one of the preceding claims, wherein the identification and monitoring step of malfunctions is carried out remotely, outside of the installation comprising the engine.

7. Device for acoustically detecting at least one malfunction (DYS) of an engine (1), the engine generating a primary noise Po, which device is arranged to be used in the presence of an active noise control system (2) which emits, towards the noise reduction targets, an acoustic signal Pc which is produced by at least one actuator (5) and is linked by a transfer function H to a control signal Y for said at least one actuator (5), which signal is produced by said active noise control system, said malfunction (DYS) having an acoustic signature which can be identified in the primary noise Po at the noise reduction targets, **characterised in that** it comprises:

    - a means (6) for acquiring the signal Y which is produced by the active control system;
    - a monitoring means (10) which is arranged to identify the possible occurrence of the malfunction (DYS) from the signal Y and from the knowledge of the transfer function H used by the active noise control system and to emit an alert message if necessary.

8. Device for acoustically detecting at least one malfunction (DYS) of an engine according to the preceding claim, wherein the acquisition means (6) is arranged to detect, using the active noise control system, changes in the transfer function that it is evaluating over time, and wherein the monitoring means (10) is arranged to use said changes in the transfer function.

9. Device for acoustically detecting malfunctions of an engine according to the preceding claim, wherein the means for acquiring the signal Y comprises inductive sensors (7) on the control cables of the actuators which are capable of receiving the control signals.

10. Device for acoustically detecting malfunctions of an engine according to one of claims 7 to 9, comprising, between the acquisition means (6) and the monitoring means (10), a means (11) for extracting indicators reduced to the components of Y and H for the frequencies specific to the identification of the malfunction (DYS) noise over a limited set characteristic frequencies.

11. Device for acoustically detecting malfunctions of an engine according to one of claims 7 to 10, wherein the monitoring means (10) is remote and comprises means (12) for remote transmission between the on-board means of the device and the remote monitoring means.

Fig. 1

Fig. 2

**Fig. 3**

**Fig. 4**

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1205749 A
- FR 2972710
- FR 1153076